# EUROPEAN PATENT APPLICATION

(11) **EP 1 640 245 A1**
(43) Date of publication of application: **29.03.2006**
(21) Application number: 05077150.0
(22) Date of filing: 21.09.2005
(51) Int. Cl.: B62D 5/04

(54) **Electric power steering controller having integrated column controls**

(30) Priority: 28.09.2004 US 613820 P
(71) Applicant: Delphi Technologies, Inc., Troy, MI 48007 (US)
(72) Inventor: Davis, Alan C., Fenton, MI 48430 (US); Ross, Christian E., Hemlock, MI 48626 (US)
(74) Representative: Denton, Michael John

(57) **Abstract**

The invention provides a steering column assembly (10) for a vehicle. The steering column assembly (10) includes a steering column structure (12) to support a steering wheel (14) at a first end and be coupled at a second end to steerable wheels of a vehicle. A steering shaft (44) extends through the steering column structure (12). A steering wheel position sensor (26) is supported by the steering column structure (12) to sense an angular position of the steering shaft (44) and communicate a position signal. A steering wheel torque sensor (28) is supported by the steering column structure (12) to sense a torque associated with rotation of the steering shaft (44) and communicate a torque signal. A motor (42) is spaced from the steering column structure (12) and an electric power steering controller (38) receives the position and torque signals and controls the motor (42) in response to provide a power steering assist to the vehicle. The steering column assembly (10) also includes at least one of a turn direction control (16) and a windshield wash/wiper and wiper delay control (18) and a light control (20) and a media control (22) and a throttle control (24) and an ignition control (30) and a security control (32) and a steering column adjustment control (36) communicating with the electric power steering controller (38).

## Description

### TECHNICAL FIELD

The invention relates to controller for controlling operation in a vehicle and more particularly to a controller for an electronic power steering system.

### BACKGROUND OF THE INVENTION

Vehicles today using electric power steering typically have column/steering wheel controls such as switches, steering wheel controls, other column-mounted electrical devices that are mechanized one of three ways. The first way is through discrete connections, whereby each signal interfaces to the vehicle by wires. The second way uses a column mounted electronics module, where the signals are converted and transmitted over a vehicle serial data bus. The third way uses a steering wheel electronics module for similar conversion to serial data of the steering wheel mounted switches. The resulting column subassembly, including electric power steering column plus controls, contains redundant materials and multiple connections to the vehicle, which is sub-optimal and costly.

### SUMMARY OF THE INVENTION

The invention provides a steering column assembly for a vehicle. The steering column assembly includes a steering column structure to support a steering wheel at a first end and be coupled at a second end to steerable wheels of a vehicle. A steering shaft extends through the steering column structure. A steering wheel position sensor is supported by the steering column structure to sense an angular position of the steering shaft and communicate a position signal. A steering wheel torque sensor is supported by the steering column structure to sense a torque associated with rotation of the steering shaft and communicate a torque signal. A motor is spaced from the steering column structure and an electric power steering controller receives the position and torque signals and controls the motor in response to provide a power steering assist to the vehicle. The steering column assembly also includes at least one of a turn direction control and a windshield wash/wiper and wiper delay control and a light control and a media control and a throttle control and an ignition control and a security control and a steering column adjustment control communicating with the electric power steering controller.

### BRIEF DESCRIPTION OF THE DRAWINGS

Advantages of the present invention will be readily appreciated as the same becomes better understood by reference to the following detailed description when considered in connection with the accompanying drawings wherein:
Figure 1 is a perspective view of a steering column assembly according to the exemplary embodiment of the invention; and
Figure 2 is a schematic diagram of control structure of the exemplary embodiment of the invention.

### DESCRIPTION OF THE PREFERRED EMBODIMENT

The subject invention involves using the controller of the electric power steering system to convert the column and/or steering wheel controls signals for transmission over the serial data bus. Significant savings can result by elimination of wires, redundant microprocessors, and redundant serial communication transceivers. The electrical connection between the electric power steering column with controls assembly and the vehicle made at the time of vehicle assembly can be reduced to power, ground, and serial data wires only. The electric power steering column with controls assembly also allows for function testing prior to assembly into the vehicle.

The signal connection from the column and/or steering wheel controls to the electric power steering controller can be made by resistive ladder, direct connection, or dedicated serial connection (internal to column + controls system), or any combination of these, allowing for optimization for cost and packaging depending primarily on a number of features.

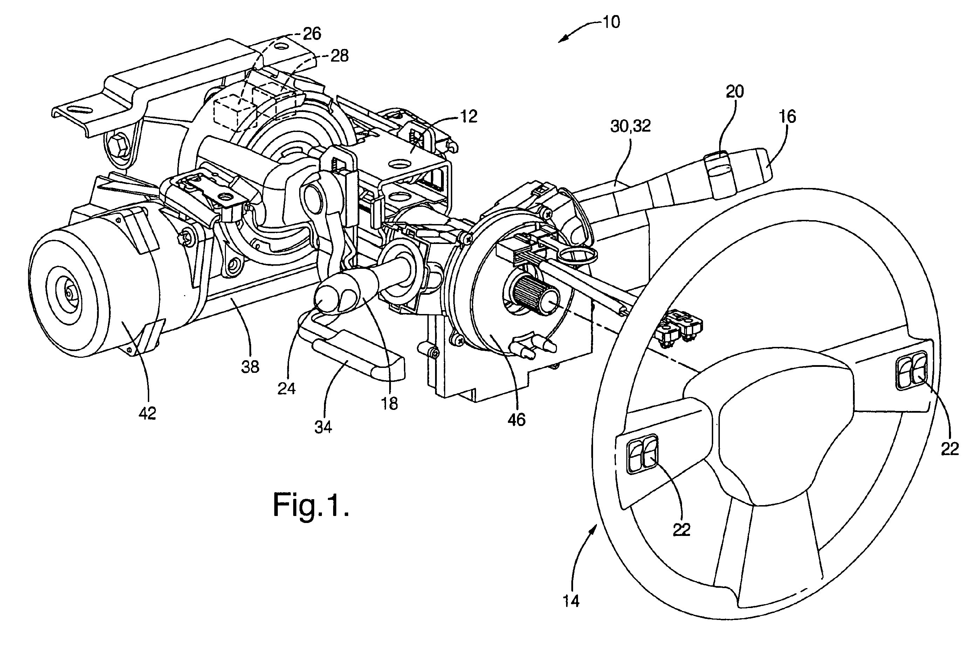

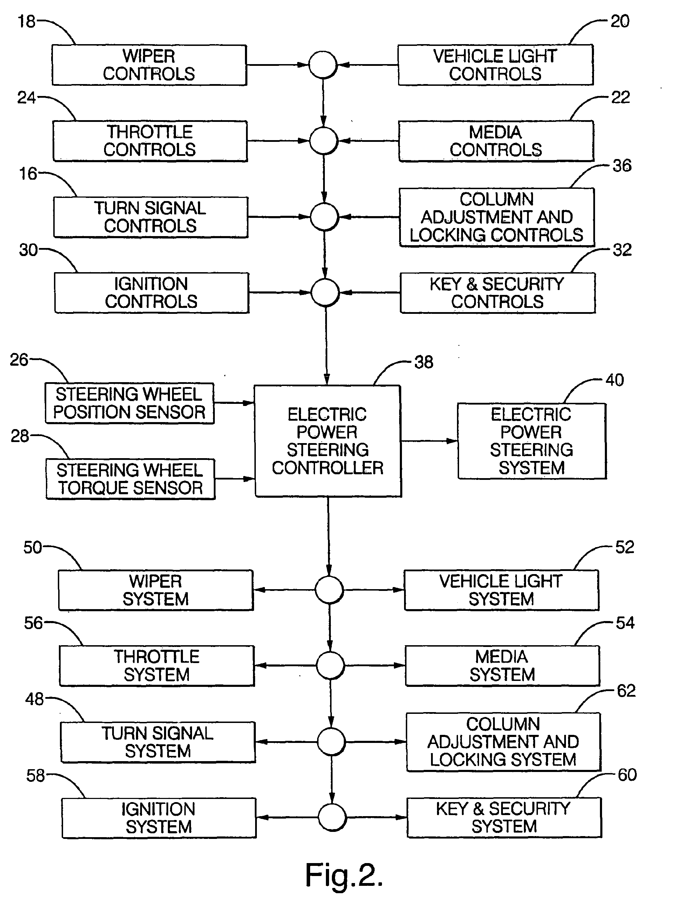

A steering column assembly 10 constructed according to the exemplary embodiment of the invention is shown in perspective view in Figure 1 and schematically in Figure 2. The steering column assembly 10 includes a column structure 12 operative to mount a steering wheel 14 at one end and operatively coupled at its opposite end to steerable wheels of a vehicle when in use to enable an operator of the vehicle to control the steering of the vehicle in known manner. A steering shaft 44 extends through said steering column structure 12, fixed for rotation with the steering wheel 14. The column structure 12 mounts a plurality of electrical devices or controls for operating various devices of the vehicle. These electric controls include, for example, a turn direction control 16; windshield wash/wiper and wiper delay control 18; light control 20 such as for headlights, interior lights and fog lights; media controls 22 such as for audio and/or video; cruise/throttle control 24; a steering wheel position sensor 26; a steering wheel torque sensor 28; an ignition control 30; a security controlsystem/sensor 32 associated with the ignition control 30 to identify a key inserted in the cylinder of the ignition control 30; a manual steering column lock 34; steering column adjustment control 36 for motors operable to move the steering column assembly 12 to a position desired by the driver. Other devices supportable by the steering column assembly include solenoid devices such as a lock if the steering column is adjustable, column harnesses, steering sensors, SIR coils, motors, and park/buzzer switches. These various switches and controls can be disposed anywhere along the column, including the steering wheel 14, and can be in the form of dials, push buttons, rotating or pivoting stalks, or locks (such as the ignition cylinder).

The steering wheel position sensor 26 and the steering wheel torque sensor 28 communicate with an electric power steering controller 38. The steering wheel position sensor 26 is disposed to sense an angular position of the steering shaft 44, which correspond to the angular position of the steering wheel 14, and communicate a position signal to the electric power steering controller 38. The steering wheel torque sensor 28 is disposed to sense a torque associated with rotation of the steering shaft 44, which correspond to the torque associated with turning the steering wheel 14, and communicates a torque signal to the electric power steering controller 38. The electric power steering controller 38 controls an electric power steering system 40 of a vehicle in response to the signals received from the steering wheel position sensor 26 and the steering wheel torque sensor 28. The electric power steering system 40 also includes a clock spring coil 46 associated with the steering wheel 14.

The electric power steering controller 36 can control a motor 42 cooperating with a rack (not shown) of a vehicle in a known manner to commutate and control the torque output and angular motion of the motor 42, and to diagnose the proper operation of the motor 42. The electric power steering controller 36 receives and transmits data to computes a position command in response to input from the position and torque sensors 26, 28. Upon receiving the position command signal from the electric power steering controller 36, the motor 42 provides a power steering assist to the rack through a steering assist assembly (not shown). The electric power steering controller 36 can also perform diagnosis of components therein to facilitate proper operation of the motor 42. The operation of such an electric power steering system is further described in U.S. patent 6,522,962, which is hereby incorporated by reference.

All of the various column and/or steering wheel control signals of the exemplary embodiment of the invention are coupled to the electric power steering controller 38 mounted on the column structure 12. Thus, according to the invention, the EPS controller 38 is used to process column electrical functions and to provide multiplexed data to the vehicle. In other words, the invention contemplates integrating the driver interface controls with a vehicle communication network through the EPS controller 38 in order to eliminate multiple controllers, duplicate wiring, and it also reduces the package size of the column assembly 10 and the various controls. The invention has a further advantage of providing a column assembly 10 having all of the functional components including the steering mechanism and the various controls and the various controls and the controller for operating the controls contained in a single column assembly module that can be supplied to a vehicle manufacturer as a one piece assembly.

For example, the turn direction control 16 communicates a turn direction signal to the electric power steering controller 38. The turn control 16 can include a lever or stalk extending transverse to the column structure 12, for example. The electric power steering controller 38 receives the turn direction signal and emits a turn direction command in response to the direction signal. A turn signal system 48 is disposed to receive the turn signal command from the electric power steering controller 38 and execute the turn direction command. The turn signal system 48 can include a plurality of lights positioned on the vehicle and the turn signal command can result in one or more of these lights being activated.

The wiper control 18 communicates a wiper signal to the electric power steering controller 38. The wiper control 18 can include a dial, a rotating lever or stalk, or a sliding bar, for example. The electric power steering controller 38 is operable to receive the wiper signal and emit a wiper command in response to the wiper signal. A wiper system 50 is disposed to receive the wiper command from the electric power steering controller 38 and execute the wiper command. The wiper system 50 can include a motor for driving wiper blades at more than one speed and a pump for spraying a windshield with wiper fluid. The wiper command can be to engage the motor or to engage the pump.

The light control 20 communicates a light selection signal to the electric power steering controller 38. The light control 20 can include a dial, a push button, or a sliding bar, for example. The electric power steering controller 38 is operable to receive the light selection signal and emit a light selection command in response to the light selection signal. A vehicle light system 52 is disposed to receive the light selection command from the electric power steering controller 38 and execute the light selection command. The vehicle light system 52 can include interior and exterior lights and the light selection command can result in one or more of these lights being activated.

The media control 22 communicates a media signal to the electric power steering controller 38. The media control 22 can be a push button or a dial, for example. The electric power steering controller 38 is operable to receive the media signal and emit a media command in response to the media signal. A media system 54 is disposed to receive the media command from the electric power steering controller 38 and execute the media command. The media system 54 can include a radio or a digital video disc player, for example. The media command can adjust volume, radio station selection, or playback of stored media.

The throttle control 24 communicates a throttle signal to the electric power steering controller 38. The throttle control 24 can include a rotating lever, a sliding protrusion, or a push button, for example. The electric power steering controller 38 is operable to receive the throttle signal and emit a throttle command in response to said throttle signal. A throttle system 56 is disposed to receive the throttle command from the electric power steering controller 38 and execute said throttle command. The throttle system 56 can include structure for setting the speed of the vehicle, also referred to a cruise control system.

The ignition control 30 communicates an ignition signal to the electric power steering controller 38. The ignition control 30 can include a cylinder for receiving a key or a push button, for example. The electric power steering controller 38 is operable to receive the ignition signal and emit an ignition command in response to the ignition signal. An ignition system 58 is disposed to receive the ignition command from the electric power steering controller 38 and execute the ignition command. The ignition system 58 can include an engine starter and the ignition command can direct the starter to turn the engine over.

The security control 32 communicates a security signal to the electric power steering controller 38. The security control 32 can include a sensor operable to detect whether an appropriate key is being used to start the vehicle or whether any key is being used to start the vehicle, for example. The electric power steering controller 38 is operable to receive the security signal and emit a security command in response to the security signal. A security system 60 is disposed to receive the security command from the electric power steering controller 38 and execute the security command. The security command may be communicated through the ignition system and prevent the vehicle from starting.

The steering column adjustment control 36 communicates a steering column adjustment signal to the electric power steering controller 38. The steering column adjustment control 36 can be a lever or a push button, for example. The electric power steering controller 38 is operable to receive the steering column adjustment signal and emit a steering column adjustment command in response to the steering column adjustment signal. A steering column adjustment system 62 is disposed to receive the steering column adjustment command from the electric power steering controller 38 and execute the steering column adjustment command. The steering column adjustment system 62 can include motors operable to move steering column jackets relative to one another or to move the steering column structure 12 along a raking path of movement, for example. The steering column adjustment system 62 can include solenoids that act as electric locks to prevent undesired movement of the steering column structure 12.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A steering column assembly (10) for a vehicle comprising:
a steering column structure (12) operative to support a steering wheel (14) at a first end and be coupled at a second end opposite the first end to steerable wheels of a vehicle to enable an operator of the vehicle to control the steering of the vehicle;
a steering shaft (44) extending through said steering column structure (12);
a steering wheel position sensor (26) supported by said steering column structure (12) and disposed to sense an angular position of said steering shaft (44) and operable to communicate a position signal;
a steering wheel torque sensor (28) supported by said steering column structure (12) and disposed to sense a torque associated with rotation of said steering shaft (44) and operable to communicate a torque signal;
a motor (42) spaced from said steering column structure (12);
an electric power steering controller (38) supported by said steering column structure (12) and disposed to receive said position and torque signals and control said motor (42) in response to said position and torque signals to provide a power steering assist to the vehicle; and
at least one of a turn direction control (16) and a windshield wash/wiper and wiper delay control (18) and a light control (20) and a media control (22) and a throttle control (24) and an ignition control (30) and a security control (32) and a steering column adjustment control (36) communicating with said electric power steering controller (38).

2. A steering column assembly (10) for a vehicle comprising:
a steering column structure (12) operative to support a steering wheel (14) at a first end and be coupled at a second end opposite the first end to steerable wheels of a vehicle to enable an operator of the vehicle to control the steering of the vehicle;
a steering shaft (44) extending through said steering column structure (12);
a steering wheel position sensor (26) supported by said steering column structure (12) and disposed to sense an angular position of said steering shaft (44) and operable to communicate a position signal;
a steering wheel torque sensor (28) supported by said steering column structure (12) and disposed to sense a torque associated with rotation of said steering shaft (44) and operable to communicate a torque signal;
a motor (42) spaced from said steering column structure (12);
an electric power steering controller (38) supported by said steering column structure (12) and disposed to receive said position and torque signals and control said motor (42) in response to said position and torque signals to provide a power steering assist to the vehicle;
a turn direction control (16) communicating a turn direction signal to said electric power steering controller (38), wherein said electric power steering controller (38) is operable to receive said turn direction signal and emit a turn direction command in response to said turn direction signal;
a turn signal system (48) disposed to receive said turn signal command from said electric power steering controller (38) and execute said turn direction command;
a wiper control (18) communicating a wiper signal to said electric power steering controller (38), wherein said electric power steering controller (38) is operable to receive said wiper signal and emit a wiper command in response to said wiper signal;
a wiper system (50) disposed to receive said wiper command from said electric power steering controller (38) and execute said wiper command;
a light control (20) communicating a light selection signal to said electric power steering controller (38), wherein said electric power steering controller (38) is operable to receive said light selection signal and emit a light selection command in response to said light selection signal;
a vehicle light system (52) disposed to receive said light selection command from said electric power steering controller (38) and execute said light selection command;
a media control (22) communicating a media signal to said electric power steering controller (38), wherein said electric power steering controller (38) is operable to receive said media signal and emit a media command in response to said media signal; and
a media system (54) disposed to receive said media command from said electric power steering controller (38) and execute said media command.

3. The steering column assembly (10) according to claim 2 further comprising:
a throttle control (24) communicating a throttle signal to said electric power steering controller (38), wherein said electric power steering controller (38) is operable to receive said throttle signal and emit a throttle command in response to said throttle signal; and
a throttle system (56) disposed to receive said throttle command from said electric power steering controller (38) and execute said throttle command.

4. The steering column assembly (10) according to claim 3 further comprising:
an ignition control (30) communicating an ignition signal to said electric power steering controller (38), wherein said electric power steering controller (38) is operable to receive said ignition signal and emit an ignition command in response to said ignition signal; and
an ignition system (58) disposed to receive said ignition command from said electric power steering controller (38) and execute said ignition command.

5. The steering column assembly (10) according to claim 4 further comprising:
a security control (32) communicating a security signal to said electric power steering controller (38), wherein said electric power steering controller (38) is operable to receive said security signal and emit a security command in response to said security signal; and
a security system (60) disposed to receive said security command from said electric power steering controller (38) and execute said security command.

6. The steering column assembly (10) according to claim 5 further comprising:
a steering column adjustment control (36) communicating a steering column adjustment signal to said electric power steering controller (38), wherein said electric power steering controller (38) is operable to receive said steering column adjustment signal and emit a steering column adjustment command in response to said steering column adjustment signal; and
a steering column adjustment system (62) disposed to receive said steering column adjustment command from said electric power steering controller (38) and execute said steering column adjustment command.
